# EUROPÄISCHE PATENTSCHRIFT

(11) **EP 2 769 391 B1**
(45) Veröffentlichungstag und Bekanntmachung des Hinweises auf die Patenterteilung: **30.12.2015**
(21) Anmeldenummer: 12758426.6
(22) Anmeldetag: 23.08.2012
(51) Int. Cl.: H01F 38/14, H01F 3/10

(54) **VORRICHTUNG ZUR INDUKTIVEN ÜBERTRAGUNG ELEKTRISCHER ENERGIE**
DEVICE FOR INDUCTIVELY TRANSFERRING ELECTRICAL ENERGY
DISPOSITIF DE TRANSMISSION D'ÉNERGIE ÉLECTRIQUE PAR INDUCTION

(30) Priorität: 17.10.2011 DE 102011054541
(43) Veröffentlichungstag der Anmeldung: 27.08.2014
(73) Patentinhaber: Conductix-Wampfler GmbH, 79576 Weil am Rhein (DE)
(72) Erfinder: ASSELIN, Pascal, F-68400 Riedisheim (FR); GREEN, Andrew, 79429 Malsburg-Marzell (DE); WECHLIN, Mathias, 79400 Kandern (DE)
(74) Vertreter: Wohlfarth, Ulrich
(86) Internationale Anmeldenummer: PCT/EP2012/066438
(87) Internationale Veröffentlichungsnummer: WO 2013/056879

(56) Entgegenhaltungen:
- WO-A1-2010/090538
- DE-A1-102006 048 829
- DE-A1-102010 050 935
- US-A1- 2010 007 215

## Beschreibung

Die Erfindung betrifft eine Vorrichtung zur induktiven Übertragung elektrischer Energie nach dem Oberbegriff des Anspruchs 1. Derartige Vorrichtungen werden insbesondere zur induktiven Ladung einer in einem Elektrofahrzeug eingebauten, wiederaufladbaren Batterie eingesetzt. Zur Erzielung eines hohen Wirkungsgrades muss die magnetische Kopplung zwischen Primär- und Sekundärseite optimiert werden, wobei aber ein Luftspalt zwischen den beiden Seiten unvermeidbar ist. Daher ist eine Führung des magnetischen Flusses durch Körper aus ferromagnetischem Material von Vorteil, um Verluste durch eine Streuung des magnetischen Feldes soweit wie möglich zu minimieren.

Aus der US 4,800,328 ist eine Batterieladevorrichtung für ein Elektrofahrzeug bekannt, bei der die Primärspule und die Sekundärspule jeweils um einen Kern aus ferromagnetischem Material gewickelt sind, der wie bei Transformatoren üblich aus einer Vielzahl einzelner Bleche zusammengesetzt ist. Diese Konstruktion hat ein hohes Gewicht und eine große Bauhöhe, die beide nachteilig und insbesondere fahrzeugseitig nach heutigen Maßstäben äußerst unerwünscht sind.

Aus der DE 10 2006 048 829 A1 ist ein System zur induktiven Übertragung elektrischer Energie zu einem Magnetschwebefahrzeug entlang seines Fahrweges bekannt, dessen Sekundärspule mit einer gitterförmigen Einheit zur Führung des magnetischen Flusses ausgestattet ist. Diese Flussführungseinheit wird durch Gießen eines Gemischs aus Gießharz und Ferritpulver in eine Gießform aus Kunststoff hergestellt. Die Gießform fungiert im fertigen Zustand der Flussführungseinheit als deren Grundkörper.

Aus der WO 2010/090538 A1 ist eine Spule eines Systems zur induktiven Übertragung elektrischer Energie bekannt, die um einen flachen Ferritkern herum gewickelt ist. Dieser Ferritkern erstreckt sich in Längsrichtung signifikant über die Enden der Spule hinaus und weist dort zwei Polflächen auf, an denen der magnetische Fluss den Kern senkrecht zur Längsrichtung der Spule verlassen soll, um sich von dort aus in einen Bereich zu erstrecken, in dem sich im Betrieb des induktiven Übertragungssystems dessen zweite Spule befindet.

Die US 2010/0007215 A1 lehrt ein kontaktloses induktives Energieübertragungssystem, dessen Empfängerseite eine Spulenplatte mit einer Sekundärspule und eine darüber angeordnete weichmagnetische Platte aufweist. Die weichmagnetische Platte umfasst ein Paar von Isolierschichten und ein hermetisch zwischen diesen eingefügtes weichmagnetisches Bauteil, welches sich aus mehreren einzelnen Elementen zusammensetzt. Als weichmagnetisches Material ist Ferrit vorgesehen.

Die DE 10 2010 050 935 A1 offenbart eine Vorrichtung zur berührungslosen induktiven Energieübertragung, bei der die Sekundärspule in einem vertieften Bereich eines Kunststoffteils angeordnet ist. Das Kunststoffteil hat einen ebenen Oberflächenbereich, auf dem ein ebener Ferritbereich angeordnet ist, und einen erhöhten Randbereich zur Ausbildung eines wannenförmigen Bereiches, welcher sowohl den vertieften Bereich, als auch den ebenen Oberflächenbereich umfasst und mit Vergussmasse vergossen ist.

Der Erfindung liegt die Aufgabe zugrunde, für die magnetische Flussführung bei einer Vorrichtung zur induktiven Energieübertragung eine neue Lösung aufzuzeigen, die sich durch geringe Bauhöhe und geringes Gewicht sowie Robustheit in Verarbeitung und Betrieb auszeichnet.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Hierdurch kann anstelle des spröden und hochgradig bruchempfindlichen Ferrits zumindest teilweise ein nanokristallines weichmagnetisches Material mit besseren mechanischen Eigenschaften bei vergleichbarer Permeabilität und vergleichbarem oder sogar etwas geringerem Gewicht zur Flussführung verwendet werden, ohne dass die Anisotropie der Permeabilität, die eine Eigenschaft dieses Materials ist, die Wirksamkeit der Flussführung und damit den Wirkungsgrad der gesamten induktiven Energieübertragung beeinträchtigt. Aufgrund der besseren mechanischen Stabilität nanokristallinen weichmagnetischen Materials können zum Aufbau einer insgesamt im wesentlichen plattenförmigen Flussführungseinheit plattenförmige Körper geringerer Dicke verwendet werden, als es mit Ferrit möglich wäre. Hierdurch kann sowohl die Bauhöhe, als auch das Gewicht der gesamten Flussführungseinheit reduziert werden.

Infolge der Anisotropie seiner magnetischen Permeabilität eignet sich dieses Material aber nicht für stark inhomogene Feldbereiche, in denen sich die Feldrichtung innerhalb geringer Distanzen deutlich ändert, da in solchen Bereichen entweder nicht die maximale Permeabilität des Materials genutzt werden könnte und somit dort keine effektive Feldführung gegeben wäre, oder das Material dort in kleinen Stücken mosaikartig nach dem Feldverlauf ausgerichtet werden müsste, was mit einem nicht vertretbaren fertigungstechnischen Aufwand verbunden wäre. In solchen Bereichen wird daher unter Inkaufnahme schlechterer mechanischer Eigenschaften Material mit isotroper Permeabilität, vorzugsweise weichmagnetischer Ferrit, verwendet, wenn es die bestehenden Anforderungen an die Wirksamkeit der Flussführung notwendig machen. Dadurch, dass in diesem Fall weniger und kleinere Ferritplatten benötigt werden als bei ausschließlicher Verwendung von Ferrit, kann dennoch die Bauhöhe und das Gewicht der Flussführungseinheit insgesamt verringert werden.

Ein zweckmäßiger Aufbau der Körper aus anisotropem ferromagnetischem Material besteht in Anpassung an die Materialeigenschaften von auf dem Markt verfügbarem weichmagnetischem nanokristallinem Material, das nur in Bändern relativ geringer Dicke verfügbar ist, in einer Laminierung von einzelnen streifenförmigen Elementen zu Paketen mit nichtleitendem Klebstoff zwischen den Elementen. Die Streifenform der einzelnen Elemente und die isolierende Wirkung der nichtleitenden Klebstoffschicht, die sich jeweils zwischen zwei benachbarten Elementen befindet, hat bei der permeabilitätsbedingten Ausrichtung zu den Windungen der Spule eine weitere vorteilhafte Wirkung, nämlich dass die Entstehung von Wirbelströmen weitgehend vermieden wird, was den Wirkungsgrad der induktiven Energieübertragung verbessert.

Ferner können auf diese Weise sowohl Körper mit einheitlicher Vorzugsrichtung der Permeabilität, als auch solche mit gezielt variierender Vorzugsrichtung realisiert werden. Letzteres kann in einfacher Weise durch eine fächerförmige Anordnung der einzelnen Elemente erreicht werden, bei der sich Dicke der isolierenden Klebstoffschichten in Längsrichtung der Streifen kontinuierlich ändert.

Eine vorteilhafte geometrische Auslegung besteht darin, dass die Windungen der Spule auf der Flussführungseinheit planar angeordnet sind und spiralförmig verlaufen. Es ergibt sich eine flache Bauform der gesamten Anordnung mit wirksamer Flussführung in lateraler Richtung durch die ferromagnetische Flussführungseinheit, die in diesem Fall die einfache Form einer Platte haben kann.

Zur Platzierung ferromagnetischer Körper mit anisotroper Permeabilität eignen sich insbesondere solche Abschnitte der Spulenwicklung, in denen die Windungen geradlinig und parallel zueinander verlaufen, wobei die Vorzugsrichtung der Permeabilität in diesem Fall senkrecht den Windungen liegt. Bei einer rechteckigen Form der Spule kommen darüber hinaus auch die Diagonalen für die Anordnung solcher ferromagnetischer Körper in Frage.

Wenn die Spule aus zwei seriell miteinander verbundenen, gleichartigen Wicklungen mit zueinander parallelen Windungsachsen und entgegengesetztem Wicklungssinn besteht, die in einer senkrecht zu den Windungsachsen liegenden Ansichtsebene benachbart zueinander angeordnet sind, und beide Wicklungen zumindest in denjenigen Bereichen, in denen sie einander zugewandt sind, geradlinige und zueinander parallele Windungsabschnitte aufweisen, dann genügt zur Flussführung ein einziger ferromagnetischer Körper mit anisotroper Permeabilität, der diese Windungsabschnitte beider Wicklungen und zumindest einen Teil der von den Wicklungen umschlossenen Bereiche ihrer jeweiligen Querschnittsflächen überdeckt. Der Aufbau der Flussführungseinheit vereinfacht sich hierdurch extrem.

Um bei dieser Spulenform die Flussführung weiter zu verbessern, können beidseitig benachbart zu dem ferromagnetischen Körper mit anisotroper Permeabilität und diesem gegenüber senkrecht zur Verbindungslinie der beiden Windungsachsen versetzt zwei Körper mit isotroper Permeabilität angeordnet sein, von denen jeder weitere Teile der Querschnittsflächen beider Wicklungen überdeckt. Der Aufbau der Flussführungseinheit ist in diesem Fall noch immer sehr einfach und weist nur eine minimale Anzahl von ferromagnetischen Körpern auf, was die Montage stark vereinfacht.

Die Spule kann entweder eine mit einer Stromversorgung verbundene Primärspule oder eine mit einer Ladeelektronik eines Energiespeichers einer mobilen Einheit, wie insbesondere einer Batterie eines elektrisch angetriebenen Fahrzeugs verbundene Sekundärspule sein, d.h. die Erfindung ist gleichermaßen auf beiden Seiten eines induktiven Energieübertragungssystems verwendbar.

Nachfolgend werden Ausführungsbeispiele der Erfindung anhand der Zeichnungen beschrieben. In diesen zeigt
- Fig. 1: eine schematische Darstellung einer Ausführungsform einer erfindungsgemäßen Primärspuleneinheit in der Draufsicht mit teilweise aufgeschnittenem Gehäuse,
- Fig. 2: die Primärspuleneinheit von Fig. 1 in der Draufsicht ohne Gehäusedeckel,
- Fig. 3: einen Teil einer Längsschnittansicht der Primärspuleneinheit von Fig. 1 entlang der Linie A-A in Fig. 1,
- Fig. 4: eine erste Ausführungsform einer erfindungsgemäßen Flussführungseinheit,
- Fig. 5: eine zweite Ausführungsform einer erfindungsgemäßen Flussführungseinheit,
- Fig. 6: einen Teil einer dritten Ausführungsform einer erfindungsgemäßen Anordnung Flussführungseinheit,
- Fig. 7: eine Ausführungsform eines ferromagnetischen Körpers mit anisotroper Permeabilität zur Flussführung in inhomogenen Feldbereichen und
- Fig. 8: eine vierte Ausführungsform einer erfindungsgemäßen Flussführungseinheit.

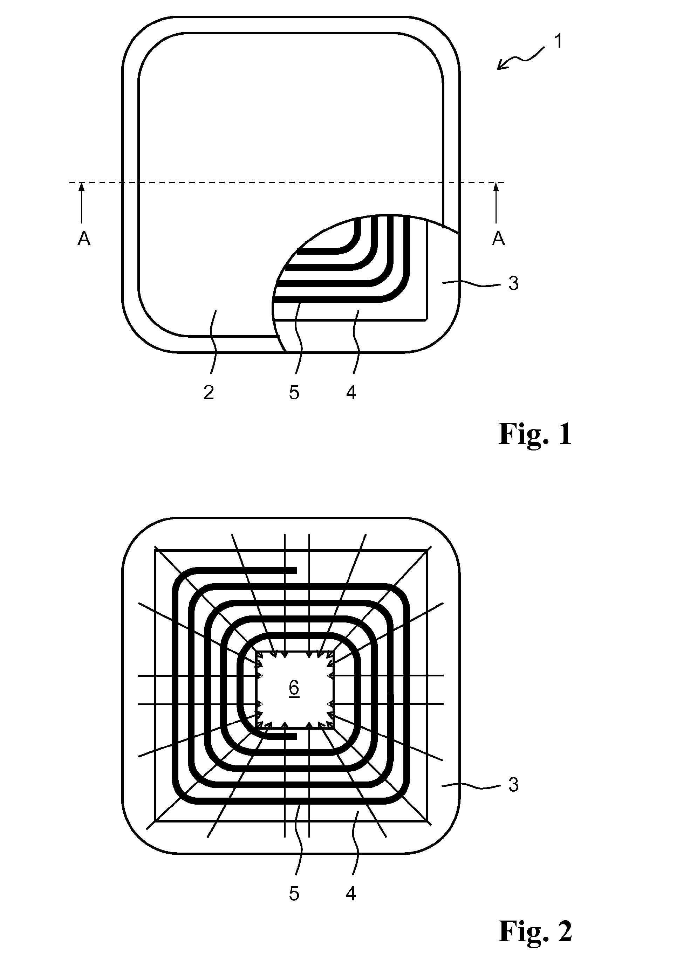

Fig. 1 zeigt eine erfindungsgemäße Vorrichtung zum induktiven Laden eines Elektrofahrzeugs, und zwar als Beispiel eine Primärspuleneinheit 1 in der Draufsicht mit teilweise, d.h. im rechten unteren Quadranten, aufgeschnittenem Gehäusedeckel 2. Das Gehäuse umfasst außer dem Deckel 2 noch eine Grundplatte 3, die zusammen einen Hohlraum bilden, in welchem auf der Grundplatte 3 eine insgesamt plattenförmige ferromagnetische Flussführungseinheit 4 und auf diesem eine planare Primärspule 5 angeordnet sind. Der Gehäusedeckel 2 besteht aus einem für ein Magnetfeld durchlässigen Material wie z. B. Kunststoff. Die Primärspuleneinheit 1 ist auf oder im Boden eines Abstellplatzes für ein Elektrofahrzeug angeordnet.

Zum Laden der Batterie eines Elektrofahrzeugs, das an seiner Unterseite mit einer gleichartigen Sekundärspuleneinheit ausgerüstet ist, wird das Fahrzeug so abgestellt, dass sich die Sekundärspuleneinheit möglichst deckungsgleich über der Primärspuleneinheit befindet, um eine effiziente induktive Energieübertragung zwischen den beiden Einheiten zu ermöglichen. An der Sekundärspuleneinheit ist eine entsprechende ferromagnetische Flussführungseinheit auf derjenigen Seite angeordnet, welche der Primärspuleneinheit 1 abgewandt ist, so dass die beiden Spuleneinheiten im Betrieb bezüglich der Abfolge der zuvor genannten Komponenten spiegelbildlich zueinander liegen, wobei sie aber nicht gleich groß sein müssen.

Dieselbe Ansicht wie Fig. 1, jedoch ohne den Gehäusedeckel 2, zeigt Fig. 2. Wie dort zu erkennen ist, hat die Grundplatte 3, die beispielsweise aus Aluminium bestehen kann, um die Funktion einer Abschirmung des Magnetfeldes zu erfüllen, eine in wesentlichen quadratische Form mit abgerundeten Ecken. Die plattenförmige ferromagnetische Flussführungseinheit 4, deren Aufgabe die Führung des von der Primärspule 5 im Betrieb erzeugten magnetischen Flusses in seitlicher Richtung ist, hat eine quadratische Außenkontur, einen ebenfalls quadratischen inneren Ausschnitt 6 und somit insgesamt die Form eines quadratischen Rahmens. Die äußere Seitenlänge der ferromagnetischen Flussführungseinheit 4 ist hier kleiner als diejenige der Grundplatte 3, so dass die ferromagnetische Flussführungseinheit 4 insgesamt auf der Grundplatte 3 aufliegt. Sie kann mit dieser durch Klebung verbunden sein. Zwischen der Flussführungseinheit 4 und der Grundplatte 3 kann sich noch eine Schicht aus elektrisch isolierendem Material befinden. Wie die Grundplatte 3 im Verhältnis zur Flussführungseinheit 4 im einzelnen Anwendungsfall zu dimensionieren ist, und ob überhaupt eine Grundplatte 3 benötigt wird, hängt von der jeweiligen Umgebung (Einbauort, Abschirmungsbedarf, Montagemöglichkeiten) ab.

Die auf der ferromagnetischen Flussführungseinheit 4 liegende planare Primärspule 5 hat wie die ferromagnetische Flussführungseinheit 4 im wesentlichen die Form eines quadratischen Rahmens. Sie ist spiralförmig geführt, wobei geradlinige Abschnitte, die parallel zu den vier Seiten der quadratischen ferromagnetischen Flussführungseinheit 4 verlaufen, in den Ecken durch Bögen miteinander verbunden sind. Von den Enden der Primärspule 5 führen nicht gezeigte Zuleitungen zu einer ebenfalls nicht gezeigten Stromversorgung, welche im Betrieb den Primärstrom liefert.

Eine Bestromung der Primärspule 5 erzeugt ein magnetisches Feld, dessen Verlauf in der Ebene der ferromagnetischen Flussführungseinheit 4 durch die in Fig. 2 eingezeichneten, zum Zentrum weisenden Pfeile, die Feldlinien darstellen sollen, wiedergeben ist. Die plattenförmige ferromagnetische Flussführungseinheit 4 führt den magnetischen Fluss unterhalb der Primärspule 5 in horizontaler Richtung und verhindert so die Ausbreitung eines magnetischen Streufeldes unterhalb der Primärspule 5 senkrecht zur Ansichtsebene von Fig. 2. Es versteht sich, dass die ferromagnetische Flussführungseinheit 4 aus einem weichmagnetischen Material besteht, um Hystereseverluste bei der Energieübertragung zu vermeiden.

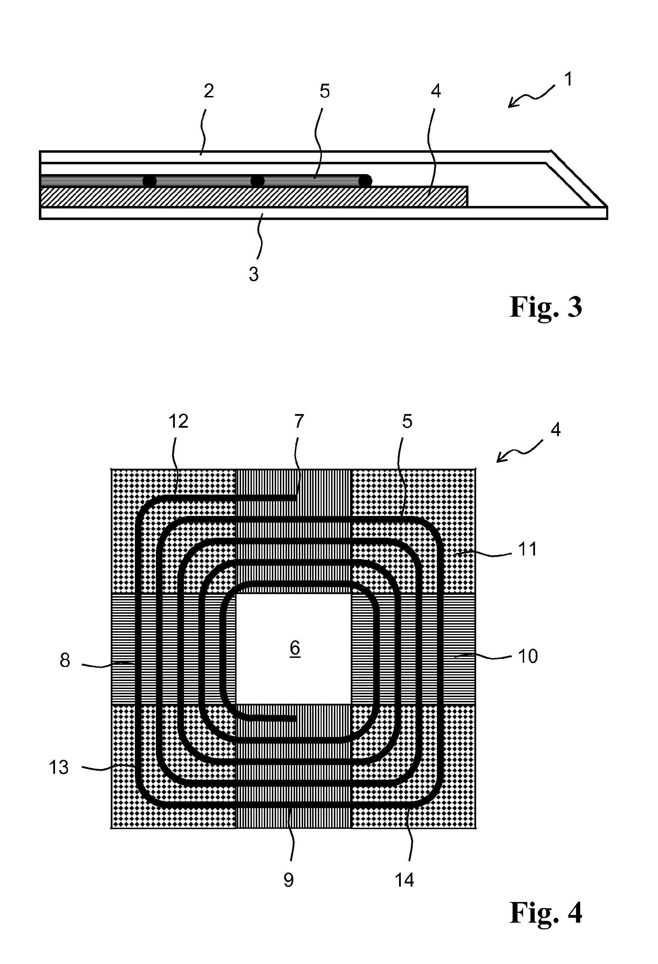

Wie Fig. 2 erkennen lässt, ist bei der in dem gezeigten Beispiel angenommenen quadratischen Form der Primärspule 5 das magnetische Feld in der ferromagnetischen Flussführungseinheit 4 unterhalb der Primärspule 5, genaugenommen die parallel zu der Plattenebene der Flussführungseinheit 4 liegende Komponente des Feldes, in denjenigen Bereichen, in denen benachbarte Windungen des die Primärspule 5 bildenden Leiters geradlinig und parallel zueinander verlaufen, annähernd homogen, während es in denjenigen Bereichen, in denen dies nicht der Fall ist, d.h. zu den Ecken des von ihr belegten quadratischen Rahmens hin, zunehmend inhomogen ist. Dies würde sinngemäß auch bei einer rechteckigen Form der Primärspule 5 mit zwei längeren und zwei kürzeren Seiten gelten, während das Feld unterhalb der Primärspule 5 bei einer runden Form der Primärspule 5 überall inhomogen wäre. Soweit hier von Feldrichtungen gesprochen wird, beziehen sich diese stets auf die Ansichtsrichtung von Fig. 2, d.h. auf die in der Ansichtsebene von Fig. 2 Komponente liegende Komponente. Fig. 3 zeigt einen Ausschnitt eines Längsschnitts der Primärspuleneinheit 1 entlang der Linie A-A in Fig. 1, und zwar im Bereich des rechten Randes. Die vertikale Schichtung der Komponenten, nämlich von unten nach oben der Grundplatte 3, der ferromagnetischen Flussführungseinheit 4, der Primärspule 5 und des Deckels 2 ist darin deutlich erkennbar. Die schwarzen Kreise innerhalb der Primärspule 5 kennzeichnen Windungen, die von der Ansichtsebene von Fig. 3 senkrecht geschnitten werden. Der Deckel 2 ist an seinem Rand nach außen hin abgeschrägt.

Ein erstes Ausführungsbeispiel des Aufbaus der ferromagnetischen Flussführungseinheit 4 ist in Fig. 4 in der Draufsicht schematisch dargestellt. Die Flussführungseinheit 4 besteht aus zwei verschiedenen Arten von ferromagnetischen Körpern, die aus unterschiedlichen Materialien bestehen. Vier quadratische Körper 7 bis 10 aus einem ersten Material berühren sich jeweils paarweise zyklisch an einer Ecke und bilden zusammen eine Fläche in Form eines Balkenkreuzes mit einem ausgesparten quadratischen Zentrum 6. Vier ebenfalls quadratische Körper 11 bis 14 aus einem zweiten Material decken die Flächen zwischen dem von den Körpern 7 bis 10 gebildeten Balkenkreuz und den Ecken des Quadrates, welches dieses Balkenkreuz umschreibt, ab. Zusammen bilden die Körper 7 bis 10 und 11 bis 14 einen Rahmen mit einem quadratischen Außenumfang und einem quadratischen Innenumfang, bei dem sich jeweils quadratische, aus verschiedenen Materialien bestehende Körper zyklisch abwechseln.

Wie ein Vergleich der Figuren 2 und 4 erweist, decken die Körper 7 bis 10 aus dem ersten Material Bereiche mit annähernd homogenem Feldverlauf ab, in denen alle Windungen der Primärspule 5 zumindest annähernd geradlinig und parallel zueinander verlaufen. Demgegenüber befinden sich die Körper 11 bis 14 aus dem zweiten Material in Bereichen mit inhomogenem Feldverlauf. Dort befinden sich Krümmungen der Windungen der Primärspule 5 bzw. es verlaufen dort zumindest nicht alle Windungen über den gesamten Bereich parallel zueinander. Vielmehr stehen hier einzelne Abschnitte verschiedener Windungen sogar senkrecht zueinander. Da die homogenen und inhomogenen Bereiche des Feldes aber kontinuierlich ineinander übergehen, erstrecken sich die Körper 7 bis 10 aus dem ersten Material teilweise auch in Raumbereiche mit etwas inhomogenem Feldverlauf hinein.

Wie in Fig. 4 angedeutet ist, besteht das für die Körper 7 bis 10 verwendete erste Material des ferromagnetischen Körpers 4 aus einer Vielzahl einzelner Streifen, die parallel zueinander angeordnet und durch Kleben miteinander verbunden, d.h. zu einem Paket laminiert sind. Bei diesem Material handelt es sich um ein nanokristallines weichmagnetisches Material auf der Basis von Eisen, Silizium und Bor mit Zusätzen wie insbesondere Niob und Kupfer. Ein solches Material ist derzeit beispielsweise unter der Bezeichnung Vitroperm® in einer Zusammensetzung von 73,5% Fe, 1% Cu, 3% Nb, 15,5% Si und 7% B auf dem Markt erhältlich. Weitere Bezeichnungen, unter denen solche Materialien bekannt ist, sind Finemet®, Nanoperm® und Hitperm. Letzteres kann beispielsweise eine Zusammensetzung von zusammen 88% Fe und Co, 7% Nb, Zr oder Hf, 4% B und 1% Cu haben.

Diese Art von Material hat eine anisotrope Permeabilität und ist im Vergleich zu weichmagnetischem Ferrit bei vergleichbaren magnetischen Eigenschaften weniger spröde und daher bei mechanischer Belastung in der Verarbeitung und im Betrieb weniger bruchanfällig. Dies gilt insbesondere für plattenförmige Körper von geringer Dicke, wie sie aus Gründen der Ersparnis von Bauraum und Gewicht für die hier interessierende Anwendung benötigt werden. Ferner ist dieses Material geringfügig leichter als Ferrit.

Bei der erfindungsgemäßen Anordnung ist die Vorzugsrichtung der magnetischen Permeabilität des ersten Materials, d.h. die Richtung größter Permeabilität, die Längsrichtung der Streifen. Diese verläuft senkrecht zum Außenumfang der rahmenförmigen ferromagnetischen Flussführungseinheit 4 und damit auch senkrecht zu den Windungen der Spule 5. Im Bereich der aus dem ersten Material bestehenden Körper 7 bis 10 der ferromagnetischen Flussführungseinheit 4 stimmt daher die magnetische Feldrichtung im wesentlichen mit der Vorzugsrichtung der Permeabilität überein, wodurch die maximale Permeabilität des ersten Materials genutzt werden kann.

Im Bereich der Ecken der rahmenförmigen ferromagnetischen Flussführungseinheit 4 liegt eine deutliche Inhomogenität des magnetischen Feldes vor. Dort, d.h. in den Zwischenräumen zwischen den aus dem ersten Material bestehenden Körpern 7 bis 10, sind Körper 11 bis 14 aus dem zweiten Material angeordnet, welches eine isotrope magnetische Permeabilität hat, so dass die Wirksamkeit der Flussführung durch die Inhomogenität des magnetischen Feldes nicht beeinträchtigt wird. Inhomogen ist das magnetische Feld auch im Bereich des quadratischen Zentrums 6. Dieses muss daher nicht unbedingt ausgespart sein, sondern dort könnte ebenfalls eine Platte aus dem zweiten Material angeordnet sein. Beispielsweise kann es sich bei diesem zweiten Material um Ferrit handeln.

Zwar wäre es wünschenswert, für die ferromagnetische Flussführungseinheit 4 insgesamt ein nanokristallines weichmagnetisches Material der zuvor erwähnten Art verwenden zu können, das weniger spröde als Ferrit ist, doch wäre dieses Material wegen der Anisotropie seiner Permeabilität für Bereiche mit stark inhomogenem Feldverlauf nicht geeignet bzw. die Herstellung eines Körpers mit an einen inhomogenen Feldverlauf genau angepasster Vorzugsrichtung der Permeabilität wäre zu aufwändig. Die in Fig. 4 gezeigte Hybridlösung aus zwei verschiedenen Materialien schließt einen ausgewogenen Kompromiss zwischen fertigungstechnischem Aufwand und magnetischer Wirksamkeit. Die einzelnen Körper 7 bis 14 der ferromagnetischen Flussführungseinheit 4 haben bei beiden Materialien einfache rechteckige Formen, die problemlos durch Sägen aus größeren Stücken hergestellt werden können. Auch die Zusammenfügung der Körper 7 bis 14 bereitet aufgrund der einfachen Form der einzelnen Körper 7 bis 14 keine Schwierigkeiten.

Je nach den Anforderungen an den Wirkungsgrad der induktiven Energieübertragung einerseits und an das Gewicht und die Kosten der gesamten Vorrichtung andererseits kann es auch sinnvoll sein, auf die aus dem zweiten Material bestehenden Körper 11 bis 14 in den Ecken des Rahmens zu verzichten und die dortigen Zwischenräume zwischen den aus dem ersten Material bestehenden Körpern 7 bis 10 leer zu belassen. Dies hat eine größere Streuung des magnetischen Flusses im Bereich der Ecken zur Folge, doch wird im Gegenzug Material, Gewicht und Arbeitsaufwand eingespart und die Verwendung von sprödem Ferrit vermieden. Die Vor- und Nachteile der beiden Ausführungsformen mit und ohne Ferritplatten in den Ecken sind im einzelnen Anwendungsfall abzuwägen.

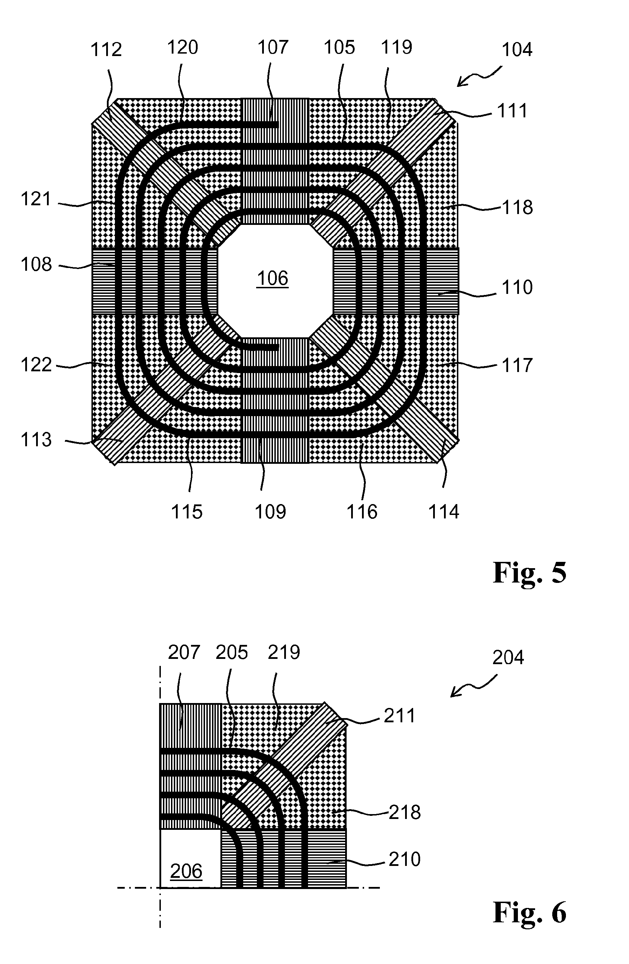

Ein zweites Ausführungsbeispiel für einen möglichen Aufbau einer ferromagnetischen Flussführungseinheit 104 ist in Fig. 5 in der Draufsicht schematisch dargestellt. Hier sind vier plattenförmige, in der Ansicht von Fig. 5 rechteckige ferromagnetische Körper 107 bis 110 aus einem ersten Material wie bei der ersten Ausführungsform kreuzförmig um ein ausgespartes Zentrum 106 herum angeordnet und definieren hierdurch zunächst einen quadratischen Rahmen.

Im Gegensatz zur ersten Ausführungsform sind die plattenförmigen Körper 107 bis 110 jedoch schmäler und berühren sich am Innenumfang des Rahmens nicht, wodurch Platz für vier weitere plattenförmige ferromagnetische Körper 111 bis 114 aus demselben Material besteht, welche jeweils diagonal zwischen den inneren und den äußeren Ecken des quadratischen Rahmens angeordnet sind und somit ebenfalls kreuzförmig um das ausgesparte Zentrum herum liegen. Die Ecken der diagonal liegenden Körper 111 bis 114 berühren die Ecken der Körper 107 bis 110 an der Innenseite des Rahmens, so dass das ausgesparte Zentrum eine achteckige Form erhält. Durch die rechteckige Form der diagonal liegenden Körper 111 bis 114 ergibt sich ferner auch eine achteckige Form des Außenumfangs der rahmenförmigen Flussführungseinheit 104.

Wie ein Vergleich der Figuren 2 und 5 erweist, decken die ferromagnetischen Körper 107 bis 110 aus dem ersten Material auch hier Bereiche mit annähernd homogenem Feldverlauf ab, in denen alle Windungen der Primärspule 105 geradlinig und parallel zueinander verlaufen, und zwar dergestalt, dass die Vorzugsrichtung der magnetischen Permeabilität senkrecht zu den Windungen der Spule 105, liegt. Näherungsweise gilt dies auch für die diagonal angeordneten ferromagnetischen Körper 111 bis 114, obwohl diese in den Krümmungsbereichen der Spule 105 liegen, da die Körper 111 bis 114 so schmal sind, dass sie seitlich nicht über die Krümmungsbereiche der Spule 5 hinausreichen und deren Krümmungsradien so groß sind, dass die Windungen über die Breite der Körper 111 bis 114 näherungsweise senkrecht zur Diagonalrichtung, welche hier die Vorzugsrichtung der Permeabilität ist, liegen. Zumindest besteht über die Breite der Körper 111 bis 114 keine signifikante Abweichung von einer solchen Lage.

Alternativ zu der in Fig. 5 gezeigten quadratischen oder einer rechteckigen Form mit abgerundeten Ecken von großem Krümmungsradius könnte die Spule 105 auch eine oktogonale Form mit vier langen und vier kurzen Seiten in abwechselnder Folge haben, wobei die kurzen Seiten des Achtecks die abgerundeten Ecken der Form von Fig. 5 ersetzen würden. In diesem Fall würden die Windungen in denjenigen Abschnitten, in denen sie von den diagonal angeordenten Körpern 111 bis 114 überdeckt werden, nicht nur näherungsweise, sondern genau senkrecht zur Vorzugsrichtung der Permeabilität liegen.

Wie in Fig. 5 angedeutet ist, besteht das für die Körper 107 bis 110 und auch 111 bis 114 verwendete erste ferromagnetische Material der der Flussführungseinheit 104 auch hier aus einer Vielzahl einzelner Streifen, die parallel zueinander angeordnet und durch Kleben miteinander verbunden, d.h. zu einem Paket laminiert sind. Die Vorzugsrichtung der magnetischen Permeabilität des ersten Materials, d.h. die Richtung größter Permeabilität, ist auch hier die Längsrichtung der Streifen, welche senkrecht zum Innen- und Außenumfang des durch die ferromagnetische Flussführungseinheit 104 definierten, in diesem Fall achteckigen Rahmens liegt. Das erste ferromagnetische Material ist dasselbe wir bei der zuvor beschriebenen ersten Ausführungsform.

Die nicht leitende Verbindungsschicht, welche die den einzelnen Streifen aus dem ersten ferromagnetischen Material zusammenhält, isoliert die einzelnen Streifen zugleich elektrisch voneinander. Dies hat bei der zuvor beschriebenen Ausrichtung der Streifen senkrecht zu den Windungen der Spule 5 oder 105 die Wirkung, dass die Wirbelstromverluste in dem Material minimiert werden und der Wirkungsgrad einer induktiven Energieübertragungsvorrichtung, deren Primär- und Sekundärspule mit einer Flussführungseinheit 4 oder 104 ausgestattet ist, verbessert wird.

Die zwischen den ferromagnetischen Körpern 107 bis 114 bestehenden Zwischenräume haben in diesem Fall die Form von rechtwinkligen Dreiecken. In diesen Zwischenräumen ist der magnetische Feldverlauf deutlich inhomogen. Analog zur ersten Ausführungsform sind diese Zwischenräume mit plattenförmigen Körpern 115 bis 122 aus einem zweiten ferromagnetischem Material mit isotroper magnetischer Permeabilität ausgefüllt. Dieses zweite, ferromagnetische Material ist dasselbe wie bei der zuvor beschriebenen ersten Ausführungsform. Die dreieckigen Körper 115 bis 122 haben alle dieselben Abmessungen und können jeweils in einfacher Weise durch einen diagonalen Schnitt aus einer quadratischen Platte hergestellt werden. Die unterschiedlichen plattenförmigen Körper 107 bis 110, 111 bis 114 und 115 bis 122 lassen sich auch hier ohne weiteres zu der Flussführungseinheit 104 zusammenfügen. Alternativ können die Zwischenräume wie bei der ersten Ausführungsform auch frei gelassen werden.

Die erste und zweite Ausführungsform können auch in vorteilhafter Weise miteinander kombiniert werden, was zu einer dritten Ausführungsform führt, von der in Fig. 6 nur der rechte obere Quadrant einer Flussführungseinheit 204 dargestellt ist, da die übrigen Quadranten hierzu spiegelsymmetrisch sind. Es werden hier rechteckige anisotrope ferromagnetische Körper 207 und 210 mit gleicher Vorzugsrichtung der Permeabilität wie bei der ersten Ausführungsform verwendet, die sich jedoch hier an den Ecken berühren, woraus sich wieder eine quadratische, jedoch kleinere Aussparung 206 im Zentrum des Rahmens ergibt. Der diagonal angeordnete anisotrope ferromagnetische Körper 211 weist in diesem Fall eine Spitze mit einem rechten Winkel auf, so dass er sich in die Ecke des zwischen den Körpern 207 und 210 bestehenden Zwischenraums lückenlos einfügen lässt.

Die in Fig. 6 sichtbaren isotropen ferromagnetischen Körper 218 und 219 und die Spule 205, von der in Fig. 6 nur ein Teil sichtbar ist, sind dieselben wie bei der zweiten Ausführungsform von Fig. 5. Der Vorteil der dritten Ausführungsform nach Fig. 6 gegenüber der ersten und der zweiten besteht darin, dass insgesamt ein größerer Anteil der Flussführungseinheit 204 durch ferromagnetische Körper aus dem ersten Material mit anisotroper magnetischer Permeabilität gebildet wird. Dafür ist die Formgebung des Körpers 211 mit der rechteckigen Spitze etwas komplizierter und erfordert eine etwas aufwändigere Bearbeitung des Rohmaterials.

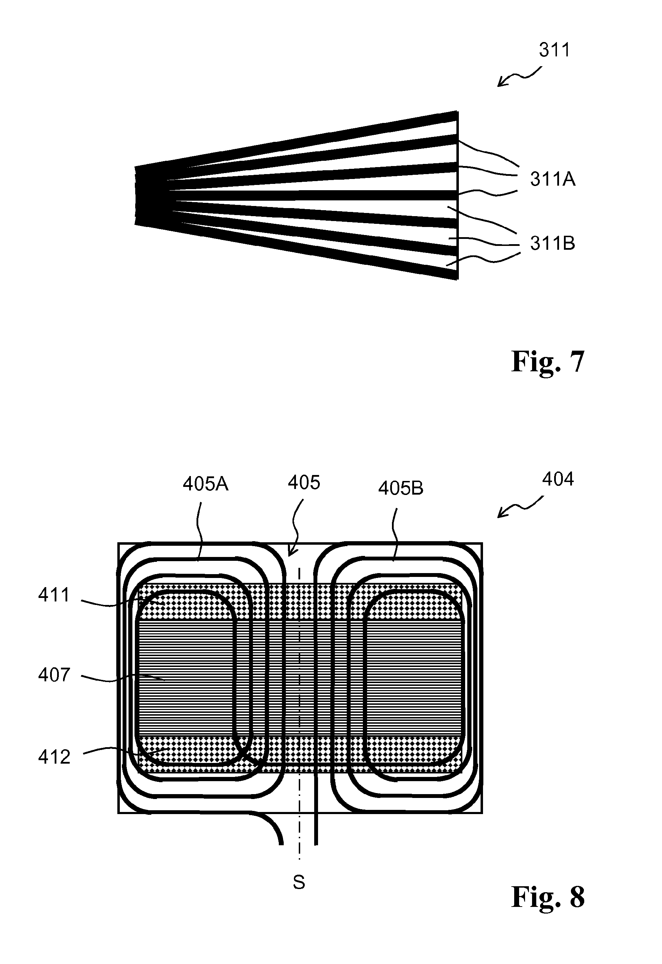

Um das erste Material mit anisotroper magnetischer Permeabilität auch in räumlichen Bereichen mit deutlicher Inhomogenität der magnetischen Feldstärke effizient zur Flussführung einsetzen zu können, muss die Vorzugsrichtung der magnetischen Permeabilität innerhalb eines aus solchen Material bestehenden Körpers variieren. Eine Möglichkeit, dies zu erreichen, zeigt Fig. 7. Der dort dargestellte ferromagnetische Körper 311 hat insgesamt eine Trapezform und weist eine Vielzahl von einzelnen Streifen 311A aus dem ersten Material mit anisotroper magnetischer Permeabilität auf, welche durch Klebstoff enthaltende Verbindungsschichten 311B miteinander verbunden sind. Während die Streifen 311A eine konstante Breite haben, variiert die Dicke der Verbindungsschichten 311B kontinuierlich entlang der Streifen 311A. Bei einem linearen Anstieg dieser Dicke zwischen den Enden der Streifen 311A ergibt sich die in Fig. 7 dargestellte Trapezform des Körpers 311, innerhalb dessen die einzelnen Streifen 311A fächerförmig angeordnet sind. Die Vorzugsrichtung der magnetischen Permeabilität ist auch hier wieder die Längsrichtung der Streifen 311A.

Ein ferromagnetischer Körper 311 der in Fig. 7 gezeigten Art könnte beispielsweise bei zweiten Ausführungsform gemäß Fig. 5 die Körper 111 bis 114 ersetzen, um im Bereich der Diagonalen die Forderung nach zueinander senkrechtem Verlauf der Windungen der Spule 5 und der Vorzugsrichtung der magnetischen Permeabilität genauer zu erfüllen. Der ferromagnetische Körper 311 kann auch mit einer rechteckigen Spitze hergestellt werden, um im dritten Ausführungsbeispiel mit demselben Ziel den dortigen Körper 211 zu ersetzen. Er könnte jedoch auch in solchen Bereichen eingesetzt werden, in denen bei den drei zuvor beschriebenen Ausführungsbeispielen wegen der starken Inhomogenität des magentischen Feldes nur ferromagnetische Körper mit isotroper Permeabilität eingesetzt sind. Auch für den Einsatz im Zentrum 6, 106 oder 206 der Spule 5, 105 oder 205 kommt der trapezörmige Körper 311 in Frage, wobei zur Abdeckung eines größeren Winkelbereiches auch mehrere solche Körper 311 seitlich nebeneinander angeordnet werden könnten.

Die Herstellung eines trapezförmigen ferromagnetischen Körpers 311 mit anisotroper Permeabilität von fächerförmig variierender Richtung gemäß Fig. 7 kann erfolgen, indem beim Zusammenkleben einzelner Streifen 311A des ersten ferromagnetischen Materials nach dem Aufbringen der klebstoffhaltigen Verbindungsschichten 311B und dem Zusammenfügen der Streifen 311A auf das so entstandene Streifenpaket, in dem die Dicke der Verbindungschichten 311B zunächst überall annähernd gleich ist, mit einer Pressform ein in Längsrichtung der Streifen 311A variierender Druck ausgeübt wird, durch den die Verbindungsschichten 311B an einem Ende des Streifenpakets teilweise herausgedrückt werden. Dies setzt voraus, dass die Verbindungsschichten noch nicht ausgehärtet sind und eine für diese Art der Verarbeitung ausreichende, aber auch nicht zu hohe Fließfähigkeit aufweisen.

Der grundsätzliche Aufbau des ferromagnetischen Körpers 311 aus einzelnen Streifen 311A konstanter Dicke des ersten ferromagnetischen Materials und dazwischen liegenden klebstoffhaltigen Verbindungsschichten 311B gilt auch für die bei den anderen Ausführungsbeispielen eingesetzten Körper aus diesem Material, doch haben bei diesen auch die Verbindungsschichten eine konstante Dicke, so dass die Streifen parallel zueinander liegen. Die Dicke der Verbindungsschichten ist dort möglichst gering gehalten, um einen möglichst großen Anteil des Raumes mit ferromagnetischem Material zu füllen.

Ein viertes Ausführungsbeispiel für einen möglichen Aufbau einer ferromagnetischen Flussführungseinheit 404 ist in Fig. 8 in der Draufsicht schematisch dargestellt. Hier besteht die Spule 405 aus zwei zueinander in Serie geschalteten Wicklungen 405A und 405B mit zueinander parallelen Windungsachsen. Wie bei den anderen Ausführungsformen handelt es sich um planare Wicklungen. Lediglich die Leitung, welche die Wicklungen 405A und 405B verbindet, überkreuzt notwendigerweise deren Windungen. Die beiden Wicklungen 405A und 405B verlaufen gegensinnig zueinander, so dass die Hauptrichtung des bei einer Bestromung der Spule 405 entstehenden Magnetfeldes im Inneren einer der beiden Wicklungen 405A oder 405B aus der senkrecht zu den Windungsachsen der beiden Wicklungen 405A und 405B liegenden Ansichtsebene von Fig. 8 heraus und im Inneren der jeweils anderen Wicklung 405B bzw. 405A in diese Ansichtsebene hinein zeigt, während es bei den zuvor beschriebenen Ausführungsformen im Inneren der Spule 5, 105 oder 205 nur eine einzige Hauptrichtung des Magnetfeldes gibt, die je nach Stromrichtung aus der Ansichtsebene der Figuren 4 bis 6 heraus oder in diese hinein zeigt.

Die beiden Wicklungen 405A und 405B haben jeweils eine rechteckige Querschnittsform und sind in der Ansichtsebene von Fig. 8 abgesehen von der sie verbindenden Leitung und ihren Zuleitungen spiegelsymmetrisch zu einer Symmetrielinie S geführt, wobei eine Seite des Rechtecks parallel zu der Symmetrielinie S liegt. Der gegenseitige Abstand der Windungen ist auf derjenigen Seite beider Wicklungen 405A und 405B, welche der jeweils anderen Wicklung 405B bzw. 405A abgewandt ist, wesentlich geringer als auf den übrigen drei Seiten, um an dieser Stelle eine Konzentration des Magnetfeldes zu bewirken.

Entsprechend der andersartigen Form der Spule 405 muss das Magnetfeld bei dieser Ausführungsform anders als bei den anderen Ausführungsformen benachbart zu der Spule in lateraler Richtung nicht vom Außenumfang zum Zentrum einer Wicklung, sondern vom Inneren einer Wicklung 405A oder 405B zum Inneren der jeweils anderen Wicklung 405B bzw. 405A geführt werden. Hierzu wird nur ein einziger plattenförmiger Körper 407 aus dem ersten Material benötigt, dessen Vorzugsrichtung der Permeabilität parallel zur Verbindungslinie der Windungsachsen der beiden Wicklungen 405A und 405B verläuft. Diese Vorzugsrichtung liegt dann an den einander zugewandten Seiten der beiden Wicklungen 405A und 405B senkrecht zu den dortigen, von dem Körper 407 überdeckten Windungsabschnitten beider Wicklungen 405A und 405B. In Längsrichtung der überdeckten Windungsabschnitte erstreckt sich der plattenförmige Körper 407 aus dem ersten Material so weit, wie diese alle geradlinig und parallel zueinander verlaufen.

Um das Magnetfeld bis ins Innere der Querschnittsflächen beider Wicklungen 405A und 405B zu führen, erstreckt sich der plattenförmiger Körper 407 aus dem ersten Material in Richtung der Verbindungslinie zwischen den Windungsachsen beider Wicklungen 405A und 405B bis zur innersten Windung auf der jeweils der anderen Wicklung 405A und 405B abgewandten Seite jeder Wicklung 405B bzw. 405A, d.h. er überdeckt die der jeweils anderen Wicklung 405A und 405B abgewandten Windungsabschnitte nicht mehr, weil dies hier einer effektiven Flussführung abträglich wäre.

Zu beiden Seiten des plattenförmigen Körpers 407 aus dem ersten Material benachbart und gegenüber diesem senkrecht zur Verbindungslinie der beiden Windungsachsen versetzt sind zwei plattenförmige Körper 411 und 412 aus dem zweiten Material angeordnet. Jeder dieser Körper 411 und 412 überdeckt weitere Teile der Querschnittsflächen beider Wicklungen 405A und 405B, und zwar solche Bereiche, in denen aufgrund des Verlaufs der Windungen das bei einer Bestromung der Spule 405 entstehende Magnetfeld inhomogen ist, und das erste Material mit anisotroper Permeabilität zur Feldführung nicht effektiv wäre. In Richtung der Verbindungslinie der beiden Windungsachsen sind die beiden plattenförmigen Körper 411 und 412 aus dem zweiten Material etwa so lang wie der plattenförmige Körper 407 aus dem ersten Material.

Aus der vorausgehenden Beschreibung ergeben sich für den Fachmann diverse Variationsmöglichkeiten der Erfindung. So muss die Spule nicht quadratisch sein, sondern sie könnte rechteckig oder oval sein, die Form eines Polygons mit mehr als vier Seiten haben, oder kreisförmig sein, wenngleich dies eine Ausdehnung der inhomogenen Feldbereiche zuungunsten der homogenen zur Folge hätte. Je inhomogener der Feldverlauf ist, umso schmäler müssen rechteckige ferromagnetische Körper mit anisotroper Permeabilität einheitlicher Richtung ausgelegt sein, um die Forderung nach näherungsweise senkrechter Lage der Vorzugsrichtung der Permeabilität zu den Windungen der Spule noch erfüllen zu können oder es müssen Körper mit fächerförmig variierender Vorzugsrichtung gemäß Fig. 7 eingesetzt werden.

Obgleich sich die beschriebenen Ausführungsbeispiele auf die Primärseite einer Vorrichtung zur induktiven Energieübertragung beziehen, ist die Erfindung ebenso gut auch für die Sekundärseite geeignet, deren Spuleneinheit den gleichen Aufbau haben kann wie die Spuleneinheit der Primärseite. Soweit hier von homogenen und inhomogenen Feldbereichen die Rede ist, gilt dies sinngemäß auch für eine Sekundärspule, denn auch eine solche könnte grundsätzlich bestromt werden und würde dann ein Magnetfeld erzeugen, wenngleich dies nicht ihre Zweckbestimmung ist. Des Weiteren ist die Erfindung unabhängig von der räumlichen Anordnung der beiden Spuleneinheiten. Diese könnte anstelle einer horizontalen Anordnung am Boden bzw. an der Unterseite eines Fahrzeugs beispielsweise auch vertikal sein.

## Patentansprüche

1. Vorrichtung (1) zur induktiven Übertragung elektrischer Energie von einer stationären Einheit zu einer benachbart zu der stationären Einheit befindlichen mobilen Einheit, wobei die Vorrichtung eine Spule (5; 105; 205; 405) und eine Flussführungseinheit (4; 104; 204; 404) zur Führung eines im Betrieb der Vorrichtung auftretenden magnetischen Flusses mit mindestens einem aus einer Vielzahl von einzelnen Elementen bestehenden ferromagnetischen Körper (7-10; 107-114; 211; 311; 407) aufweist, wobei die Flussfühnmgseinheit (4; 104; 204; 404) die Grundform einer Platte hat und auf einer Seite der Spule (5; 105; 205; 405), mit der Plattenebene senkrecht zur Windungsachse der Spule (5; 105; 205; 405) liegend, so angeordnet ist, dass sie die senkrecht zur Windungsachse liegende Querschnittsfläche der Spule (5; 105; 205; 405) zumindest teilweise überdeckt, **dadurch gekennzeichnet, dass** sich der ferromagnetische Körper (7-10; 107-114; 207. 210,211; 311; 407) aus einzelnen Elementen mit anisotroper magnetischer Permeabilität zusammensetzt und insgesamt eine anisotrope magnetische Permeabilität aufweist, und dass in einer senkrecht zur Windungsachse der Spule (5; 105; 205; 405) liegenden Ansichtsebene in solchen Bereichen, in welchen der ferromagnetische Körper (7-10; 107-114; 207, 210, 211; 311; 407) mit anisotroper Permeabilität Windungsabschnitte der Spule (5; 105; 205; 405) überdeckt, die einzelnen Elemente des ferromagnetischen Körpers (7-10; 107-114; 211; 311; 407) zu der Spule (5; 105; 205; 405) so ausgerichtet sind, dass die Vorzugsrichtung der magnetischen Permeabilität, in der diese in der Ansichtsebene den größten Betrag hat, zumindest näherungsweise senkrecht zu den entsprechend überdeckten Windungsabschnitten der Spule (5; 105; 205; 405) liegt.

2. Vorrichtung nach Anspruch 1, **dadurch gekennzeichnet, dass** die Flussführungseinheit (4; 104; 204; 404) mindestens einen ferromagnetischen Körper (11-14; 115-122; 218, 219; 419, 420) mit isotroper magnetischer Permeabilität aufweist, der benachbart zu dem Körper (7-10; 107-114; 207, 210, 211; 311; 407) mit anisotroper Permeabilität so angeordnet ist, dass er in einer senkrecht zur Windungsachse der Spule (5; 105; 205; 405) liegenden Ansichtsebene Windungsabschnitte der Spule (5; 105; 205; 405) überdeckt, welche kein ferromagnetischer Körper (7-10; 107-114; 207, 210, 211; 311; 407) mit anisotroper Permeabilität überdeckt.

3. Vorrichtung nach Anspruch 1 oder 2, **dadurch gekennzeichnet, dass** die Spule (5; 105; 205) eine zumindest annähernd symmetrische Spiralform hat, und dass die Flussfühnmgseinheit eine Vielzahl ferromagnetischer Körper (7-10; 107-114; 207, 210, 211; 311) mit anisotroper Permeabilität aufweist, die symmetrisch in Bezug auf ein Symmetriezentrum und/oder mindestens eine Symmetrieachse der Spule (5; 105; 205; 405) angeordnet sind.

4. Vorrichtung nach einem der Ansprüche 1 bis 3, **dadurch gekennzeichnet, dass** alle ferromagnetischen Körper (7-14; 107-122; 207, 210, 211, 218, 219; 311; 407, 419, 420) die Form von Platten haben und nebeneinander auf einer senkrecht zur Windungsachse der Spule (5; 105; 205; 405) liegenden Ebene angeordnet sind.

5. Vorrichtung nach einem der Ansprüche 1 bis 4, **dadurch gekennzeichnet, dass** die Elemente, aus denen der ferromagnetische Körper (7-10; 107-114; 207, 210, 211; 311; 407) mit anisotroper Permeabilität besteht, einzelne Streifen eines anisotropen ferromagnetischen Materials sind, deren Längsrichtung die Vorzugsrichtung der Permeabilität ist, und die nebeneinander angeordnet und zu einem geschlossenen Körper (7-10; 107-114; 207, 210, 211; 311; 407) miteinander verbunden sind.

6. Vorrichtung nach Anspruch 5, **dadurch gekennzeichnet, dass** die Verbindung der einzelnen Streifen des anisotropen ferromagnetischen Materials durch eine jeweils zwischen zwei einander benachbarten Streifen befindliche Schicht aus einem nichtmagnetischen, zumindest teilweise aus einem Klebstoff bestehenden, und elektrisch nicht leitendem Material bewirkt wird.

7. Vorrichtung nach Anspruch 5 oder 6, **dadurch gekennzeichnet, dass** sie eine Vielzahl der ferromagnetischen Körper (7-10; 107-114; 207, 210, 211; 311) mit anisotroper Permeabilität aufweist und bei mindestens einem dieser Körper (311) die einzelnen Streifen (311A) des anisotropen ferromagnetischen Materials fächerförmig angeordnet sind.

8. Vorrichtung nach Anspruch 7, **dadurch gekennzeichnet, dass** die Fächerform durch eine jeweils zwischen zwei einander benachbarten Streifen (311A) des anisotropen ferromagnetischen Materials befindliche Schicht (311B) aus einem nichtmagnetischen, zumindest teilweise aus einem Klebstoff bestehenden und elektrisch nicht leitendem Material bewirkt wird, deren Dicke von einem Ende der benachbarten Streifen (311A) zum anderen Ende hin kontinuierlich zunimmt.

9. Vorrichtung nach einem der Ansprüche 1 bis 8, **dadurch gekennzeichnet, dass** die Windungen der Spule (5; 105; 205; 405) planar angeordnet sind und spiralförmig verlaufen.

10. Vorrichtung nach einem der Ansprüche 1 bis 9, **dadurch gekennzeichnet, dass** die Spule (5; 105; 205; 405) Abschnitte aufweist, in denen ihre Windungen geradlinig und parallel zueinander verlaufen, und dass in mindestens einem solchen Abschnitt mindestens ein Körper (7-10; 107-114; 207, 210, 211; 311; 407) mit anisotroper magnetischer Permeabilität angeordnet ist, wobei die Vorzugsrichtung der magnetischen Permeabilität senkrecht zu den Windungen liegt.

11. Vorrichtung nach einem der Ansprüche 1 bis 10, **dadurch gekennzeichnet, dass** die ferromagnetischen Elemente, aus denen sich ein Körper (7-10; 107-114; 207, 210, 211; 311; 407) mit anisotroper magnetischer Permeabilität zusammensetzt, aus einem nanokristallinen weichmagnetischen Material bestehen.

12. Vorrichtung nach einem der Ansprüche 1 bis 11, **dadurch gekennzeichnet, dass** die Elemente (11-14; 115-122; 218, 219; 411, 412) mit isotroper magnetischer Permeabilität aus weichmagnetischem Ferrit bestehen.

13. Vorrichtung nach einem der Ansprüche 1 bis 12, **dadurch gekennzeichnet, dass** die Spule (405) aus zwei seriell miteinander verbundenen, gleichartigen Wicklungen (405A, 405B) mit zueinander parallelen Windungsachsen und entgegengesetztem Wicklungssinn besteht, die in einer senkrecht zu den Windungsachsen liegenden Ansichtsebene benachbart zueinander angeordnet sind, dass beide Wicklungen (405A, 405B) zumindest in denjenigen Bereichen, in denen sie einander zugewandt sind, geradlinige und zueinander parallele Windungsabschnitte aufweisen, und dass der ferromagnetische Körper (407) mit anisotroper Permeabilität diese Windungsabschnitte beider Wicklungen (405A, 405B) und zumindest einen Teil der von den Wicklungen (405A, 405B) umschlossenen Bereiche ihrer jeweiligen Querschnittsflächen überdeckt.

14. Vorrichtung nach Anspruch 13, **dadurch gekennzeichnet, dass** beidseitig benachbart zu dem ferromagnetischen Körper (407) mit anisotroper Permeabilität und diesem gegenüber senkrecht zur Verbindungslinie der beiden Windungsachsen versetzt zwei Körper (411, 412) mit isotroper Permeabilität angeordnet sind, von denen jeder weitere Teile der Querschnittsflächen beider Wicklungen (405A, 405B) überdeckt.

15. Vorrichtung nach einem der Ansprüche 1 bis 14 **dadurch gekennzeichnet, dass** die Spule (5; 105; 205; 405) entweder eine Primärspule oder eine Sekundärspule der Vorrichtung zur induktiven Energieübertragung ist.

## Claims

1. Device (1) for inductive transmission of electrical energy from a stationary unit to a mobile unit located adjacent to the stationary unit, wherein the device exhibits a coil (5; 105; 205; 405) and a flux guide unit (4; 104; 204; 404) for guiding a magnetic flux occurring while the device is in operation with at least one ferromagnetic body (7-10; 107-114; 211; 311; 407) consisting of a multiplicity of individual elements, wherein the flux guide unit (4; 104; 204; 404) has the basic shape of a plate and is arranged on one side of the coil (5; 105; 205; 405) with the plane of the plate lying perpendicular to the winding axis of the coil (5; 105; 205; 405), so that it at least partly covers the cross-sectional area of the coil (5; 105; 205; 405) lying perpendicular to the winding axis, **characterised in that** the ferromagnetic body (7-10; 107-114; 207, 210, 211; 311; 407) is composed of individual elements with anisotropic magnetic permeability and overall exhibits an anisotropic magnetic permeability, and **in that** in a viewing plane lying perpendicular to the winding axis of the coil (5; 105; 205; 405) in regions in which the ferromagnetic body (7-10; 107-114; 207, 210, 211; 311; 407) with anisotropic permeability covers winding sections of the coil (5; 105; 205; 405) the individual elements of the ferromagnetic body (7-10; 107-114; 211;311; 407) are aligned in relation to the coil (5; 105; 205; 405) so that the predominant direction of the magnetic permeability in which this has the greatest amount in the viewing plane is at least approximately perpendicular to the correspondingly covered winding sections of the coil (5; 105; 205; 405).

2. Device according to claim 1, **characterised in that** the flux guide unit (4; 104; 204; 404) exhibits at least one ferromagnetic body (11-14; 115-122; 218, 219; 419, 420) with isotropic magnetic permeability which is arranged adjacent to the body (7-10; 107-114; 207, 210, 211; 311; 407) with anisotropic permeability so that in a viewing plane lying perpendicular to the winding axis of the coil (5; 105; 205; 405) it covers winding sections of the coil (5; 105; 205; 405) which no ferromagnetic body (7-10; 107-114; 207, 210, 211; 311; 407) with anisotropic permeability covers.

3. Device according to claim 1 or 2, **characterised in that** the coil (5; 105; 205) has an at least approximately symmetrical spiral shape, and **in that** the flux guide unit exhibits a multiplicity of ferromagnetic bodies (7-10; 107-114; 207, 210, 211; 311) with anisotropic permeability which are arranged symmetrically in relation to a centre of symmetry and/or at least one axis of symmetry of the coil (5; 105; 205; 405).

4. Device according to one of claims 1 to 3, **characterised in that** all the ferromagnetic bodies (7-14; 107-122; 207, 210, 211, 218, 219; 311; 407, 419, 420) have the shape of plates and are arranged next to one another in a plane lying perpendicular to the winding axis of the coil (5; 105; 205; 405).

5. Device according to one of claims 1 to 4, **characterised in that** the elements of which the ferromagnetic body (7-10; 107-114; 207, 210, 211; 311; 407) with anisotropic permeability consists, are individual strips of an anisotropic ferromagnetic material the longitudinal direction of which is the predominant direction of the permeability, and which are arranged next to one another and connected with one another to form a closed body (7-10; 107-114; 207, 210, 211; 311; 407).

6. Device according to claim 5, **characterised in that** the connection of the individual strips of the anisotropic ferromagnetic material is produced by a layer of a material which is non-magnetic, at least partly composed of an adhesive and electrically non-conducting and located in each case between two adjacent strips.

7. Device according to claim 5 or 6, **characterised in that** it exhibits a multiplicity of the ferromagnetic bodies (7-10; 107-114; 207, 210, 211; 311) with anisotropic permeability and in the case of at least one of these bodies (311) the individual strips (311 A) of the anisotropic ferromagnetic material are arranged in the shape of a fan.

8. Device according to claim 7, **characterised in that** the fan shape is produced by a layer (311 B) of a material which is non-magnetic, at least partly composed of an adhesive and electrically non-conducting and located in each case between two adjacent strips (311A) of the anisotropic ferromagnetic material and the thickness of which increases continuously from one end of the adjacent strips (311A) to the other end.

9. Device according to one of claims 1 to 8, **characterised in that** the windings of the coil (5; 105; 205; 405) are arranged so as to be planar and run in a spiral shape.

10. Device according to one of claims 1 to 9, **characterised in that** the coil (5; 105; 205; 405) exhibits sections in which its windings run in a straight line and parallel to one another, and **in that** at least one body (7-10; 107-114; 207, 210, 211; 311; 407) with anisotropic magnetic permeability is arranged in at least one such section, wherein the predominant direction of the magnetic permeability is perpendicular to the windings.

11. Device according to one of claims 1 to 10, **characterised in that** the ferromagnetic elements of which a body (7-10; 107-114; 207, 210, 211; 311; 407) with anisotropic magnetic permeability is composed are made of a nano-crystalline soft magnetic material.

12. Device according to one of claims 1 to 11, **characterised in that** the elements (11-14; 115-122; 218, 219; 411, 412) with isotropic magnetic permeability are made of soft magnetic ferrite.

13. Device according to one of claims 1 to 12, **characterised in that** the coil (405) consists of two windings (405A, 405B) of the same type which are connected with one another in series and have winding axes which are parallel to one another and are wound in the opposite direction and are arranged adjacent to one another in a viewing plane lying perpendicular to the winding axes, **in that** the two windings (405A, 405B) exhibit winding sections which run in straight lines and parallel to one another, at least in the regions in which they face one another, and **in that** the ferromagnetic body (407) with anisotropic permeability covers these winding sections of both windings (405A, 405B) and at least a part of the regions of their respective cross-sectional areas enclosed by the windings (405A, 405B).

14. Device according to claim 13, **characterised in that** arranged on both sides near to the ferromagnetic body (407) with anisotropic permeability and offset in relation to the latter perpendicular to the connection line of the two winding axes there are two bodies (411, 412) with isotropic permeability each of which covers further parts of the cross-sectional areas of the two windings (405A, 405B).

15. Device according to one of claims 1 to 14, **characterised in that** the coil (5; 105; 205; 405) is either a primary coil or a secondary coil of the device for inductive transmission of energy.

## Revendications

1. Dispositif (1) de transfert par induction d'énergie électrique d'une unité fixe à une unité mobile qui se trouve au voisinage de l'unité fixe, le dispositif comprenant une bobine (5 ; 105 ; 205 ; 405) et une unité de guidage de flux (4 ; 104 ; 204 ; 404), servant à guider un flux magnétique généré lors du fonctionnement du dispositif, qui comprend au moins un corps ferromagnétique (7-10 ; 107-114 ; 211 ; 311 ; 407) constitué d'une pluralité d'éléments individuels, l'unité de guidage de flux (4 ; 104 ; 204 ; 404) ayant la forme de base d'une plaque et étant disposée sur un côté de la bobine (5 ; 105 ; 205 ; 405) avec le plan de la plaque perpendiculaire à l'axe d'enroulement de la bobine (5 ; 105 ; 205 ; 405), de sorte qu'il recouvre au moins en partie la surface de section de la bobine (5 ; 105 ; 205 ; 405) perpendiculaire à l'axe d'enroulement, **caractérisé en ce que** le corps ferromagnétique (7-10 ; 107-114 ; 207, 210, 211 ; 311 ; 407) se compose d'éléments individuels qui possèdent une perméabilité magnétique anisotrope et présente dans son ensemble une perméabilité magnétique anisotrope, et **en ce que**, dans un plan de projection perpendiculaire à l'axe d'enroulement de la bobine (5 ; 105 ; 205 ; 405), dans les zones où le corps ferromagnétique (7-10 ; 107-114 ; 207, 210, 211 ; 311 ; 407) présentant une perméabilité anisotrope recouvre des segments d'enroulement de la bobine (5 ; 105 ; 205 ; 405), les éléments individuels du corps ferromagnétique (7-10 ; 107-114 ; 211 ; 311 ; 407) sont orientés par rapport à la bobine (5 ; 105 ; 205 ; 405) de telle manière que la direction préférentielle de la perméabilité magnétique, dans laquelle celle-ci a la plus grande valeur dans le plan de projection, est au moins approximativement perpendiculaire aux segments d'enroulement de la bobine (5 ; 105 ; 205 ; 405) recouverts de manière correspondante.

2. Dispositif selon la revendication 1, **caractérisé en ce que** l'unité de guidage de flux (4 ; 104 ; 204 ; 404) comprend au moins un corps ferromagnétique (11-14 ; 115-122 ; 218, 219 ; 419, 420) présentant une perméabilité magnétique isotrope, qui est disposé au voisinage du corps (7-10 ; 107-114 ; 207, 210, 211 ; 311 ; 407) présentant une perméabilité anisotrope, de sorte qu'il recouvre les segments d'enroulement de la bobine (5 ; 105 ; 205 ; 405) dans un plan de projection perpendiculaire à l'axe d'enroulement de la bobine (5 ; 105 ; 205 ; 405), lequel ne recouvre pas le corps ferromagnétique (7-10 ; 107-114 ; 207, 210, 211 ; 311 ; 407) présentant une perméabilité anisotrope.

3. Dispositif selon la revendication 1 ou 2, **caractérisé en ce que** la bobine (5 ; 105 ; 205) a une forme de spirale au moins presque symétrique, et **en ce que** l'unité de guidage de flux comprend une pluralité de corps ferromagnétique (7-10 ; 107-114 ; 207, 210, 211 ; 311) présentant une perméabilité anisotrope, qui sont disposés de manière symétrique par rapport à un centre de symétrie et/ou à au moins un axe de symétrie de la bobine (5 ; 105 ; 205 ; 405).

4. Dispositif selon l'une quelconque des revendications 1 à 3, **caractérisé en ce que** tous les corps ferromagnétiques (7-14 ; 107-122 ; 207, 210, 211, 218, 219 ; 311 ; 407, 419, 420) ont la forme de plaques et sont disposés les uns à côté des autres sur un plan perpendiculaire à l'axe d'enroulement de la bobine (5 ; 105 ; 205 ; 405).

5. Dispositif selon l'une quelconque des revendications 1 à 4, **caractérisé en ce que** les éléments dont le corps ferromagnétique (7-10 ; 107-114 ; 207, 210, 211 ; 311 ; 407) présentant une perméabilité anisotrope est constitué sont des bandes individuelles d'un matériau ferromagnétique anisotrope, dont la direction longitudinale est la direction préférentielle de la perméabilité, et qui sont disposées les unes à côté des autres et sont reliées les unes aux autres pour obtenir un corps (7-10 ; 107-114 ; 207, 210, 211 ; 311 ; 407) fermé.

6. Dispositif selon la revendication 5, **caractérisé en ce que** la liaison des bandes individuelles du matériau ferromagnétique anisotrope est mise en oeuvre au moyen d'une couche située respectivement entre deux bandes voisines l'une de l'autre et faite d'un matériau non magnétique, constitué au moins en partie d'un adhésif, et non électroconducteur).

7. Dispositif selon la revendication 5 ou 6, **caractérisé en ce qu'**il comprend une pluralité de corps ferromagnétiques (7-10 ; 107-114 ; 207, 210, 211 ; 311) présentant une perméabilité anisotrope et, pour au moins un de ces corps (311), les bandes individuelles (311A) du matériau ferromagnétique anisotrope sont disposées en forme d'éventail.

8. Dispositif selon la revendication 7, **caractérisé en ce que** la forme d'éventail est obtenue par une couche (311B) située respectivement entre deux bandes (311A) voisines l'une de l'autre du matériau ferromagnétique anisotrope, ladite couche étant faite d'un matériau non magnétique, constitué au moins en partie d'un adhésif et non électroconducteur, dont l'épaisseur augmente de manière continue d'une extrémité des bandes (311A) voisines à l'autre extrémité.

9. Dispositif selon l'une quelconque des revendications 1 à 8, **caractérisé en ce que** les enroulements de la bobine (5 ; 105 ; 205 ; 405) sont disposés à plat et s'étendent en forme de spirale.

10. Dispositif selon l'une quelconque des revendications 1 à 9, **caractérisé en ce que** la bobine (5 ; 105 ; 205 ; 405) comprend des segments dans lesquels les enroulements de ladite bobine s'étendent de manière rectiligne et parallèlement les uns aux autres, et **en ce qu'**au moins un corps (7-10 ; 107-114 ; 207, 210, 211 ; 311 ; 407) présentant une perméabilité magnétique anisotrope est disposé dans au moins un segment de ce type, la direction préférentielle de la perméabilité magnétique étant perpendiculaire aux enroulements.

11. Dispositif selon l'une quelconque des revendications 1 à 10, **caractérisé en ce que** les éléments ferromagnétiques dont se compose un corps (7-10 ; 107-114 ; 207, 210, 211 ; 311 ; 407) présentant une perméabilité magnétique anisotrope sont constitués d'un matériau nanocristallin magnétique doux.

12. Dispositif selon l'une quelconque des revendications 1 à 11, **caractérisé en ce que** les éléments (11-14 ; 115-122 ; 218, 219 ; 411, 412) présentant une perméabilité magnétique anisotrope sont constitués de ferrite magnétique douce.

13. Dispositif selon l'une quelconque des revendications 1 à 12, **caractérisé en ce que** la bobine (405) est constituée de deux enroulements (405A, 405B) de structure similaire, reliés en série l'un à l'autre, comprenant des axes d'enroulement parallèles les uns aux autres et un sens d'enroulement opposé, qui sont disposés au voisinage l'un de l'autre dans un plan de projection perpendiculaire aux axes d'enroulement, **en ce que** les deux enroulements (405A, 405B) comprennent au moins dans les zones dans lesquelles ils sont tournés l'un vers l'autre des segments d'enroulement rectilignes et parallèles les uns aux autres, et **en ce que** le corps ferromagnétique (407) présentant la perméabilité anisotrope recouvre ces segments d'enroulement des deux enroulements (405A, 405B) et au moins une partie des zones, entourées par les enroulements (405A, 405B), de leurs surfaces de section concernées.

14. Dispositif selon la revendication 13, **caractérisé en ce que** deux corps (411, 412) présentant une perméabilité isotrope, parmi lesquels chacun recouvre d'autres parties des surfaces de section des deux enroulements (405A, 405B), sont disposés en décalé des deux côtés au voisinage du corps ferromagnétique (407) présentant une perméabilité anisotrope et à l'opposé de ce dernier perpendiculairement à la ligne de liaison des deux axes d'enroulement.

15. Dispositif selon l'une quelconque des revendications 1 à 14, **caractérisé en ce que** la bobine (5 ; 105 ; 205 ; 405) est soit une bobine primaire soit une bobine secondaire du dispositif permettant le transfert d'énergie par induction.
